# FASCICULE DE BREVET EUROPEEN

(11) **EP 2 010 402 B1**
(45) Date de publication et mention de la délivrance du brevet: **20.10.2010**
(21) Numéro de dépôt: 07731187.6
(22) Date de dépôt: 23.03.2007
(51) Int. Cl.: B60G 13/04

(54) **VEHICULE A TROIS ROUES**
DREIRÄDRIGES FAHRZEUG
THREE-WHEELED VEHICLE

(30) Priorité: 04.04.2006 FR 0602907
(43) Date de publication de la demande: 07.01.2009
(73) Titulaire: Naud, Jean, 75015 Paris (FR); Naud, Frédéric, 75003 Paris (FR); Naud, Jean Michel, 75015 Paris (FR)
(72) Inventeur: Naud, Jean, 75015 Paris (FR); Naud, Frédéric, 75003 Paris (FR); Naud, Jean Michel, 75015 Paris (FR)
(86) Numéro de dépôt international: PCT/FR2007/000499
(87) Numéro de publication internationale: WO 2007/118959

(56) Documents cités:
- FR-A- 722 026
- FR-A- 1 228 087
- GB-A- 122 923
- GB-A- 158 838
- US-A- 2 005 263

## Description

La présente invention concerne une propulsion et sa suspension associée pour véhicule. L'invention s'adaptant particulièrement aux véhicules urbains ou aux véhicules de petites tailles conçues pour une ou deux personnes. L'invention ayant comme objectif de proposer maniabilité, agilité et souplesse d'utilisation. L'invention trouvant une application particulière pour la conduite urbaine particulièrement adapté pour les pays en voie de développement.

Il est connu de nombreux véhicules de petites tailles pour un ou plusieurs passagers. Certains véhicules sportifs sont conçus pour le tout terrain, ils offrent presque la même ergonomie d'utilisation qu'une moto. Ces véhicules sont peu maniables en ville et leur ergonomie de conduite rappelle plus celle d'une moto que celle d'une voiture. Leur conduite est donc mal aisée pour des citadins lambda. Les véhicules du type voiturette électrique pour le golf offrent un habitacle et une motorisation inadaptée pour la conduite citadine ou de déplacement court. Les voitures à motorisation essence ou électrique traditionnelles présentent des solutions onéreuses et lourdes. Il n'existe pas encore de voiture une ou deux places qui soit positionnée sur au moins quatre roues et qui propose une motorisation avec sa propulsion et son châssis qui soit économique et robuste..

Le Document GB 122923 expose un véhicule ayant un train arrière comprenant trois roues.

Un objectif principal de l'invention est de proposer une propulsion de véhicule qui soit pratique, maniable, adaptable aux différentes qualité de chaussées.

Un objectif de l'invention est de proposer une propulsion légère qui permette une surface projetée au sol minimum de façon à rendre le véhicule le plus compact possible. La compacité de ce véhicule lui permettant de mieux se faufiler et d'évoluer avec plus de facilité sur la route aux milieux des autres véhicules.

Un objectif de l'invention est de proposer une propulsion adaptée pour un seul utilisateur. Cette solution offrant des économies d'énergie évidentes tout en procurant à l'utilisateur les mêmes agréments qu'une voiture traditionnelle de faible cylindrée.

Un objet de l'invention est de proposer une propulsion et une motorisation qui soit économique à la fabrication. l'invention proposant une motorisation qui est fabriquée dans l'industrie du scooter et propose son adaptation sur un véhicule quatre roues. Le montage des pièces entre elles nécessitant un minimum d'intervention humaine. Sous une forme préférentielle, le véhicule et sa propulsion présentant des qualités de robustesse et de légèreté pour les économies d'énergie.

Un objet de l'invention étant de proposer une propulsion et sa motorisation qui réponde aux normes de sécurité en vigueur et qui présente des caractéristiques de protection de l'utilisateur.

Dans un aspect principal l'invention propose un train de trois roues arrière avec une roue de propulsion motorisée et deux roues d'équilibre positionnées de part et d'autre de la roue de propulsion.

Dans un aspect de l'invention, le train de roue arrière comprend un jeu d'amortisseur et un jeu de liaison articulée entre les roues. Ce jeu permettant une grande adaptabilité au terrain cabossé.

Dans un aspect de l'invention, la motorisation d'un scooter traditionnel de type 80 cm 3 ou 125 cm3 ou plus peut être adapté selon l'invention pour propulser un véhicule urbain une ou deux personnes à des vitesses et avec une puissance qui ne sont pas minorées par rapport à celle d'un scooter correspondant. L'invention permettant ainsi de disposer d'un véhicule rapide, agile et économique pour une ou deux personnes, particulièrement adapté au milieu urbain ou au trajets de courtes ou moyennes distances.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue de dos du train de roues arrière selon l'invention
- Les figures 2a, 2b représentent deux vues de côté de la liaison d'une roue au châssis du véhicule selon deux situations de terrain
- La figure 3 représente une vue de dessus du train de roues arrière et de sa liaison au châssis
- Les figures 4a, 4b et 4c représentent trois vues de situation d'amortissement du train de roues arrières selon trois conditions de terrain différentes
- La figure 5 représente une vue de dos du train de roues arrière avec une motorisation particulière
- La figure 6 représente une vue d'un véhicule une ou deux personnes particulièrement adapté à cette propulsion de train arrière trois roues

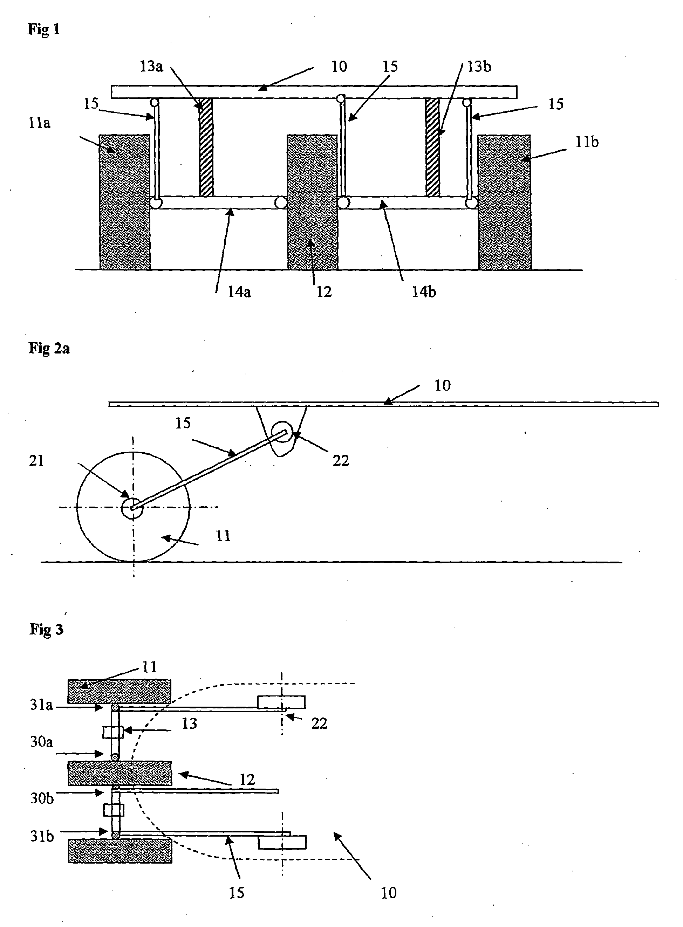

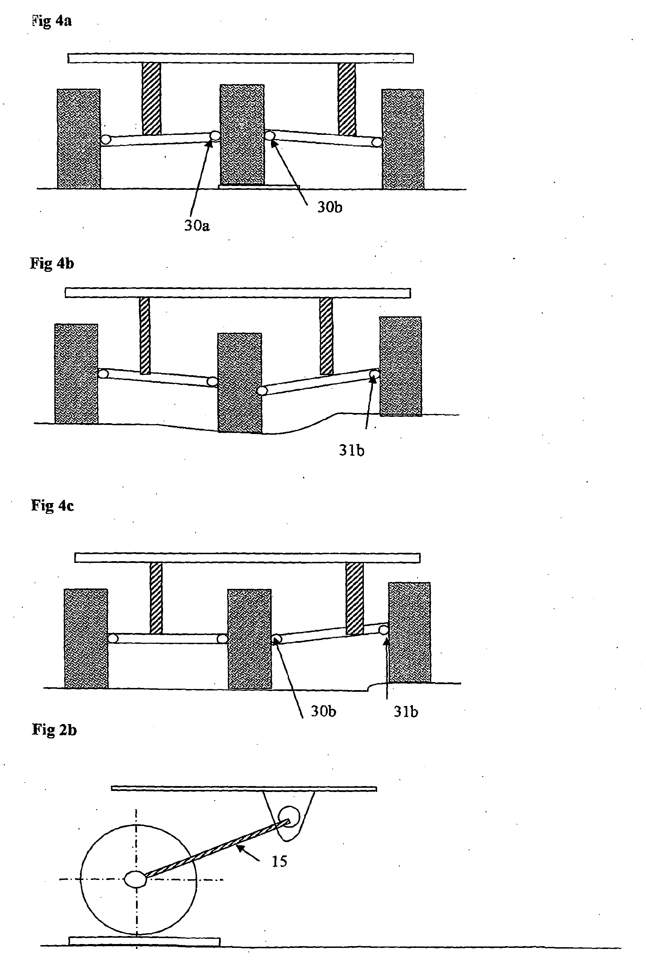

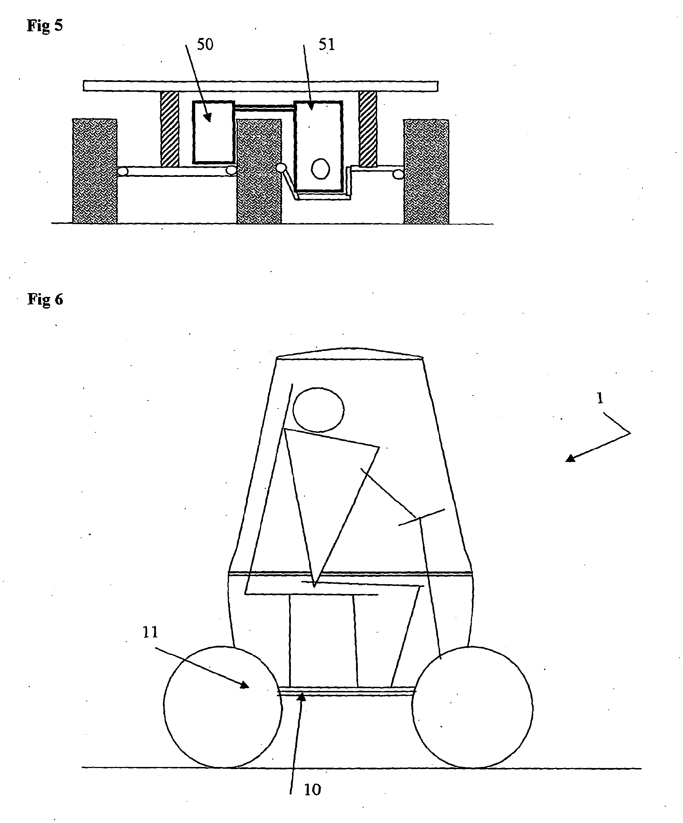

La Figure 1 représente une vue de dos du train de roues arrière (11a, 11b, 12) réalisé par une roue de propulsion (12) et deux roues d'équilibre (11a, 11b) qui sont neutres soit non motorisées. Préférentiellement pour des raisons d'équilibrage, c'est la roue centrale qui est la roue de propulsion (12), les deux roues d'équilibre (11) étant positionnées de part et d'autre symétriquement de chaque côté de la roue de propulsion (12). Chacune des roues (11a, 11b, 12) est retenue au châssis par un maintien de roue (15) au châssis (10) plus particulièrement décrit en figures 2a, 2b. Chacune des roues (11, 12), qu'il s'agisse de la roue de propulsion (11) ou des d'équilibre (12) étant liée d'une façon traditionnelle par un longeron depuis l'arbre de rotation de roue (21) jusque sur une âme (22) positionnée sur le châssis (10). Pour que la roue (11, 12) puisse avoir un mouvement relatif par rapport au châssis (10) pour épouser la conduite au sol, le longeron de maintien est soit articulé selon ses extrémités de lien avec la roue et avec le châssis, figure 2a, soit comporte un dispositif d'amortissement incorporé, figure 2b. Une particularité principale de l'invention résidant dans le fait que les trois roues sont alignées et reliées entre elle deux à deux par un essieu (14a, 14b). Les deux essieux de train arrière étant chacun articulé avec la roue au niveau de son axe de direction à s'adapter aux contraintes de sol comme décrit figure 4a, 4b, 4c. Chaque essieux de train arrière (14a, 14b) étant lié au châssis par un amortisseur (13a, 13b) d'essieux. La position des deux amortisseurs étant symétrique autour de la roue de propulsion (12). Les amortisseurs coulissant de façon réglable le long des essieux (14a, 14b) et le long du châssis (10). La position des amortisseurs permettant d'augmenter ou de diminuer la charge supportée par la roue de propulsion (12) de façon à augmenter ou diminuer son adhérence sur le sol. Ce réglage étant facile et pouvant par exemple être réglé par l'utilisateur en fonction des caractéristiques de conduite qu'il choisira, qualité du sol, poids du conducteur, nature de la conduite. La figure 3 représente une vue de dessus du train de roues arrière et de sa liaison au châssis (10) par les maintiens de roues (15) au châssis (10) et comment les trois roues sont alignées et reliées deux à deux par des essieux (14), la liaison des essieux (14a, 14b) avec la roue de propulsion (12) étant une liaison articulée (30a, 30b), tout comme la liaison des essieux (14a, 14b) avec les roues d'équilibre (12) selon les liaisons articulées (31a, 31b). Les figures 4a, 4b et 4c représentent trois vues de situation d'amortissement du train de roues arrières selon trois conditions de terrain différentes. Figure 4a, dénivelé positif sous la roue de propulsion (12), et donc compression des amortisseurs d'essieux (13a, 13b) et rotation des liaisons articulées d'essieux (30a, 30b) de roue de propulsion (12). Figure 4b, léger dénivelé négatif sous la roue de propulsion (12) et dénivelé positif sous la roue d'équilibre droite (11b), et donc dilatation de l'amortisseur d'essieux gauche (13a) et compression de l'amortisseur d'essieux droit (13b) et rotation des liaisons articulées d'essieux (30a, 30b) de roue de propulsion (12) et rotation en un sens de la liaison articulée d'essieux (31b) de roue d'équilibre droite (11b) et rotation en un sens opposé de la liaison articulée d'essieux (3 1 a) de roue d'équilibre gauche (11a). Figure 4c, dénivelé positif sous la roue d'équilibre droite (11b), et donc compression de l'amortisseurs d'essieux droit (13b) et rotation des de la liaison articulée droite d'essieux (30b) de roue de propulsion (12) et rotation de la liaison articulée d'essieux (31b) de roue d'équilibre droite (11b). La figure 5 représente une vue de dos du train de roues arrière avec une motorisation particulière (50, 51) qui comprend un moteur (50) et un pot d'échappement (51) d'une forme asymétrique à celle du moteur (50). Le volume du pot d'échappement (51) empiétant sur la ligne virtuelle qui relie le centre de rotation de la roue de propulsion (12) à la roue d'équilibre droite(11b), ce qui fait que sous cette forme les essieux de liaison droit (14b) adopte une forme particulière rigide du type en U qui épouse le volume extérieur du pot d'échappement (51). Le principal étant que cette liaison soit rigide tout en étant articulée (30b, 31b) à chacune de ses extrémités. Ce type de liaison permettant de s'adapter à tout type de volume de motorisation ou d'équipement souhaité par le constructeur. La figure 6 représente une vue d'un véhicule (1) une ou deux personnes particulièrement adapté à cette propulsion de train arrière trois roues, une ou deux personnes, véhicule urbain de petite taille, maniable et peu gourmand en énergie, et qui adapte une motorisation connue de type scooter.

L'invention concerne donc un train de roues arrière pour véhicule (1) une ou deux personnes comprenant un train de roues arrières (11, 12) et un train de deux roues avant monté sur un châssis (10) caractérisé en ce que le train de roues arrières (11, 12) comprend une roue de propulsion motorisée (12) positionnée entre deux roues d'équilibre (11a, 11b)

L'invention concerne donc un train de roues arrière pour véhicule (1) une ou deux personnes caractérisé en ce que les trois roues (11, 12) du train arrière sont alignées et reliées entre elle deux à deux par deux essieux (14a, 14b) de train arrière, chaque essieu (14a, 14b) de train arrière étant articulé dans sa liaison (30, 31) avec la roue (11, 12)

L'invention concerne donc un train de roues arrière pour véhicule (1) une ou deux personnes caractérisé en ce que chaque essieu de train arrière (14a, 14b) est lié au châssis par un amortisseur (13a, 13b) d'essieux

L'invention concerne donc un train de roues arrière pour véhicule (1) une ou deux personnes caractérisé en ce que les amortisseurs d'essieux (13a, 13b) sont positionnés sur les essieux (14a, 14b) de train arrière à une distance réglable entre les deux roues qu'ils relient

L'invention concerne donc un train de roues arrière pour véhicule (1) une ou deux personnes caractérisé en ce que les essieux de train arrière (14a, 14b) adoptent une forme particulière rigide du type en U qui épouse le volume extérieur du pot d'échappement (51) ou d'un équipement de motorisation tout en étant articulée (30b, 31b) à chacune de ses extrémités en contact avec les deux roues qu'il rejoint (11, 12)

L'invention concerne donc un train de roues arrière pour véhicule (1) une ou deux personnes caractérisé en ce que la roue de propulsion est réalisé à partir du mécanisme de propulsion d'un scooter

On voit donc bien que de nombreuses variantes éventuellement susceptibles de se combiner peuvent être ici apportées sans jamais sortir du cadre de l'invention tel qu'il est défini ci-après.

## Revendications

1. Train de roues arrière pour véhicule (1) une ou deux personnes comprenant un train de roues arrières (11, 12) et un train de deux roues avant monté sur un châssis (10), le train de roues arrières (11, 12) comprend une roue de propulsion motorisée (12) positionnée entre deux roues d'équilibre (11a, 11b) **caractérisé en ce que** les trois roues (11, 12) du train arrière sont alignées et reliées entre elle deux à deux par deux essieux (14a, 14b) de train arrière, chaque essieu (14a, 14b) de train arrière étant articulé dans sa liaison (30, 31) avec chacune des roues (11, 12)

2. Train de roues arrière pour véhicule (1) une ou deux personnes selon la revendication 1 **caractérisé en ce que** chaque essieu de train arrière (14a, 14b) est lié au châssis par un amortisseur (13a, 13b) d'essieux

3. Train de roues arrière pour véhicule (1) une ou deux personnes selon la revendication 1 **caractérisé en ce que** les amortisseurs d'essieux (13a, 13b) sont positionnés sur les essieux (14a, 14b) de train arrière à une distance réglable entre les deux roues qu'ils relient

4. Train de roues arrière pour véhicule (1) une ou deux personnes selon la revendication 1 **caractérisé en ce que** les essieux de train arrière (14a, 14b) adoptent une forme particulière rigide du type en U qui épouse le volume extérieur du pot d'échappement (51) ou d'un équipement de motorisation tout en étant articulée (30b, 31b) à chacune de ses extrémités en contact avec les deux roues qu'il rejoint (11, 12)

5. Train de roues arrière pour véhicule (1) une ou deux personnes selon la revendication 1 **caractérisé en ce que** la roue de propulsion est réalisé à partir du mécanisme de propulsion d'un scooter

## Claims

1. Rear set of wheels for a one- or two-person vehicle (1) comprising a set of rear wheels (11, 12) and a set of two front wheels mounted on a frame (10), the set of rear wheels (11, 12) comprises a motorised propulsion wheel (12) positioned between two stabilizer wheels (11a, 11b), **characterized in that** the three wheels (11, 12) of the rear set are aligned and connected between them two by two by two rear set axles (14a, 14b), each rear set axle (14a, 14b) being articulated in its link (30, 31) with each of the wheels (11, 12).

2. Rear set of wheels for a one- or two-person vehicle (1) according to Claim 1, **characterized in that** each rear set axle (14a, 14b) is linked to the frame by an axle damper (13a, 13b).

3. Rear set of wheels for a one- or two-person vehicle (1) according to Claim 1, **characterized in that** the axle dampers (13a, 13b) are positioned on the rear set axles (14a, 14b) at an adjustable distance between the two wheels which they connect.

4. Rear set of wheels for a one- or two-person vehicle (1) according to Claim 1, **characterized in that** the rear set axles (14a, 14b) adopt a particular rigid form of the U-shaped type, which conforms in shape to the exterior volume of the silencer (51) or of an item of motorisation equipment, whilst being articulated (30b, 31b) at each of its ends in contact with the two wheels which it connects (11, 12).

5. Rear set of wheels for a one- or two-person vehicle (1) according to Claim 1, **characterized in that** the propulsion wheel is realized from the propulsion mechanism of a scooter.

## Patentansprüche

1. Hinterradsatz für ein Fahrzeug (1) für eine oder zwei Personen, das einen Satz Hinterräder (11, 12) und einen Satz von zwei Vorderrädern, der an einem Fahrgestell (10) angebracht ist, umfasst, wobei der Satz Hinterräder (11, 12) ein motorgetriebenes Antriebsrad (12) umfasst, das zwischen zwei Stützrädern (11a, 11b) positioniert ist, **dadurch gekennzeichnet, dass** die drei Räder (11, 12) des Hinterradsatzes zueinander ausgerichtet und paarweise durch zwei Hinterradsatz-Achsen 14a, 14b) miteinander verbunden sind, wobei jede Hinterradsatz-Achse (14a, 14b) an ihrer Verbindungsstelle (30, 31) mit jedem der Räder (11, 12) gelenkig angebracht ist.

2. Hinterradsatz für ein Fahrzeug (1) für eine oder zwei Personen nach Anspruch 1, **dadurch gekennzeichnet, dass** jede Hinterradsatz-Achse (14a, 14b) über einen Achsstoßdämpfer (13a, 13b) mit dem Fahrgestell verbunden ist.

3. Hinterradsatz für ein Fahrzeug (1) für eine oder zwei Personen nach Anspruch 1, **dadurch gekennzeichnet, dass** die Achsstoßdämpfer (13a, 13b) an den Hinterradsatz-Achsen (14a, 14b) in einem einstellbaren Abstand zwischen den zwei Rädern, die sie verbinden, positioniert sind.

4. Hinterradsatz für ein Fahrzeug (1) für eine oder zwei Personen nach Anspruch 1, **dadurch gekennzeichnet, dass** die Hinterradsatz-Achsen (14a, 14b) eine spezielle starre Form von der Art eines U aufweisen, die sich an das Außenvolumen des Auspufftopfes (51) oder einer Motorisierungsvorrichtung anschmiegt, und zugleich an jedem ihrer Enden, die sich in Kontakt mit den zwei Rädern (11, 12) befinden, die sie verbinden, angelenkt sind (30b, 31b).

5. Hinterradsatz für ein Fahrzeug (1) für eine oder zwei Personen nach Anspruch 1, **dadurch gekennzeichnet, dass** das Antriebsrad ausgehend vom Antriebsmechanismus eines Motorrollers ausgeführt ist.
